# EUROPEAN PATENT APPLICATION

(11) **EP 2 050 958 A1**
(43) Date of publication of application: **22.04.2009**
(21) Application number: 07792278.9
(22) Date of filing: 09.08.2007
(51) Int. Cl.: F04B 27/14, B60H 1/32, F04B 49/06

(54) **CONTROL DEVICE FOR VARIABLE DISPLACEMENT COMPRESSOR, AND CONTROL METHOD FOR THE VARIABLE DISPLACEMENT COMPRESSOR**

(30) Priority: 09.08.2006 JP 2006216850
(71) Applicant: Calsonic Kansei Corporation, Saitama-shi, Saitama 331-8501 (JP)
(72) Inventor: TAKAHASHI, Eiji, Saitama-shi Saitama 331-8501 (JP)
(74) Representative: Grünecker, Kinkeldey, Stockmair & Schwanhäusser Anwaltssozietät
(86) International application number: PCT/JP2007/065628
(87) International publication number: WO 2008/018549

(57) **Abstract**

A control method controlling a compression capacity of a variable capacity compressor (8), using a capacity control valve (13) which senses a pressure difference between a high pressure (Pd) and a low pressure (Ps) in a refrigeration cycle (7a), including: calculating a target duty factor (Dt1) for the capacity control valve (13) based on a target evaporator-exit temperature (TMeva) and an actual evaporator-exit temperature (Teva); calculating a driving torque (Trq2) of the compressor (8) as an upper-limit driving torque (Trq2) based on a high pressure (Pd) under an assumption that the compressor (8) is in a full-stroke state; calculating an estimated driving torque (Trq1) of the compressor (8) based on an actual control electric current (Isolc); and selecting the target duty factor (Dt1) as an output duty factor (Dtc) when the estimated driving torque (Trq1) is smaller than the upper-limit driving torque (Trq2), and selecting a duty factor (Dt2) calculated based on the upper-limit driving torque (Trq2) as the output duty factor (Dtc) when the estimated driving torque (Trq1) is equal to or larger than the upper-limit driving torque (Trq2).

## Description

### TECHNICAL FIELD

The present invention relates to a controller and a control method for a variable capacity compressor provided in a refrigeration cycle.

### BACKGROUND ART

A refrigeration cycle of an air conditioner has a compressor, a condenser, an expansion valve and an evaporator. In a conventional refrigeration cycle, in order to control temperature of a cool air discharged from the air conditioner, or in order to control temperature of an air downstream of the evaporator (evaporator-exit air temperature), a Ps pressure sensitive capacity control valve has been used to control a discharge amount of the variable capacity compressor. With the Ps pressure sensitive capacity control valve, when a pressure in the refrigeration cycle fluctuates, a discharge amount of the variable capacity compressor is changed such that Ps (that is, pressure of refrigerant which is to be introduced into the compressor) converges to a certain value. "Ps" refers to a low pressure in the refrigeration cycle, that is, a pressure of the refrigerant which is to be introduced into the compressor. "Pd" refers to a high pressure in the refrigeration cycle, that is, a pressure of the refrigerant discharged from the compressor. "Pc" refers to a pressure in a crank chamber of the compressor.

Here, driving torque of the variable capacity compressor is dependent on a pressure difference between the discharge pressure Pd of the compressor and the suction pressure Ps of the compressor. It thus is difficult to accurately estimate a driving torque of the compressor in the variable capacity compressor using the above-described Ps pressure sensitive capacity control valve.

When the compressor and another device share one drive source, it is preferable to estimate an accurate driving torque of the compressor. For example, when a compressor is driven by an output of a vehicle engine, a driving torque of the compressor is a load on the vehicle engine, thereby, it is preferable to estimate an accurate driving torque of the compressor to control the vehicle engine based on it.

From this point of view, an air has been proposed which provides a Pd-Ps pressure difference sensitive capacity control valve for detecting a pressure difference (Pd-Ps pressure difference) between a discharge pressure Pd and a suction pressure Ps of a compressor to control a variable capacity compressor, and a driving torque of the compressor is estimated based on a control signal sent to the Pd-Ps pressure difference sensitive capacity control valve (for example, Japanese Patent Application Laid-Open No. 2004-175290).

### DISCLOSURE OF THE INVENTION

However, the Pd-Ps pressure difference sensitive capacity control valve is unable to directly control the suction pressure Ps in the variable capacity compressor. This causes a difficulty in controlling an evaporator-exit air temperature. The evaporator-exit air temperature is thus controlled by an electronic circuit including a temperature sensor and a control amplifier.

In this configuration, when the evaporator-exit air temperature is lower than a target value, a signal for increasing an electric current is sent to the capacity control valve even when the variable capacity compressor is in a full-stroke state, and the electric current will goes us to unnecessary level.

A first aspect of the present invention is a variable capacity compressor controller controlling a compression capacity using a capacity control valve (13) which senses a pressure difference between a high pressure (Pd) and a low pressure (Ps) in a refrigeration cycle (7a), including: a target value calculator (61) calculating a target duty factor (Dt1) or a target control electric current value (Isol1) for the capacity control valve (13) based on a target temperature (TMeva) and an actual temperature (Teva); an upper-limit-torque calculator (62) calculating, based on a high pressure (Pd), an upper-limit driving torque (Trq2) which is a driving torque (Trq2) of a variable capacity compressor (8) under an assumption that the compressor (8) is in a full-stroke state; a torque estimator (63) calculating an estimated driving torque (Trq1) of the compressor (8) based on an actual control electric current (Isolc); and an output value determiner (64) selecting the target duty factor (Dt1) or the target control electric current value (Isol1) calculated by the target value calculator (61) as an output duty factor (Dtc) or an output control electric current value (Isolc) when the estimated driving torque (Trq1) is smaller than the upper-limit driving torque (Trq2), and selecting a duty factor (Dt2) or a control electric current value (Isol2) calculated based on the upper-limit driving torque (Trq2) as the output duty factor (Dtc) or the output control electric current value (Isolc) when the estimated driving torque (Trq1) is equal to or greater than the upper-limit driving torque (Trq2).

A second aspect of the present invention is a variable capacity compressor control method controlling a compression capacity using a capacity control valve (13) which senses a pressure difference between a high pressure (Pd) and a low pressure (Ps) in a refrigeration cycle (7a), including: calculating a target duty factor (Dt1) or a target control electric current value (Isol1) for the capacity control valve (13) based on a target temperature (TMeva) and an actual temperature (Teva); calculating, based on a high pressure (Pd), an upper-limit driving torque (Trq2) which is a driving torque (Trq2) of a variable capacity compressor (8) under an assumption that the compressor (8) is in a full-stroke state; calculating an estimated driving torque (Trq1) of the compressor (8) based on an actual control electric current (Isolc); and selecting the target duty factor (Dt1) or the target control electric current value (Isol1) as an output duty factor (Dtc) or an output control electric current value (Isolc) when the estimated driving torque (Trq1) is smaller than the upper-limit driving torque (Trq2), and selecting a duty factor (Dt2) or a control electric current value (Isol2) calculated based on the upper-limit driving torque (Trq2) as the output duty factor (Dtc) or the output control electric current value (Isolc) when the estimated driving torque (Trq1) is equal to or larger than the upper-limit driving torque (Trq2).

### BRIEF DESCRIPTION OF THE DRAWINGS

[Fig. 1] Fig. 1 is a block diagram of an overall structure of a vehicular air conditioner according to an embodiment of the present invention.
[Fig. 2] Fig. 2 is a sectional view of a variable capacity compressor in Fig. 1.
[Fig. 3] Fig. 3 is a block diagram explaining a capacity control of the variable capacity compressor in Fig. 2.
[Fig. 4] Fig. 4 is a block diagram of a detailed structure of a compressor controller.
[Fig. 5] Fig. 5 is a flow chart illustrating a method for controlling a capacity control valve performed by the compressor controller.
[Fig. 6] Fig. 6 is an example of a map used to obtain a target duty factor.
[Fig. 7] Fig. 7 is an example of a map used to obtain an estimated driving torque value.
[Fig. 8] Fig. 8 is an example of a map used to obtain an upper-limit driving torque value.
[Fig. 9] Fig. 9 is a graph of a relationship between a control electric current for the capacity control valve shown in Fig. 3 and a Pd-Ps pressure difference.
[Fig. 10] Fig. 10 is a graph illustrating experimental results conducted by an inventor of the present invention.

### BEST MODE FOR CARRYING OUT THE INVENTION

An embodiment of the present invention will be described with reference to the drawings. In the drawings, the same parts are indicated by the same reference numbers.

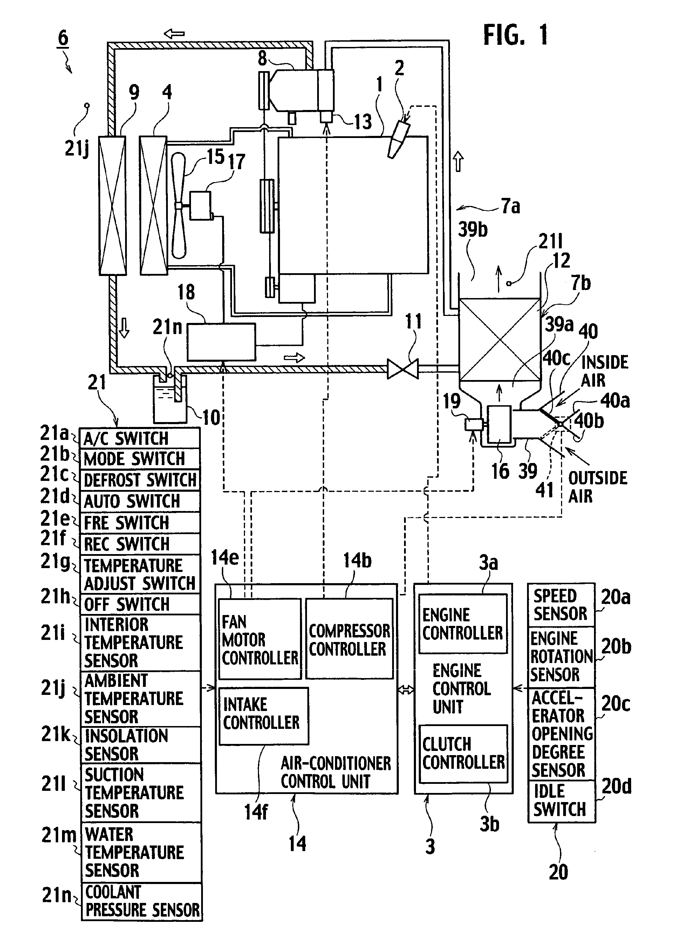

An overall structure of a vehicular air conditioner 6 according to an embodiment of the present invention will be described with reference to Fig. 1. An engine 1 has a fuel injector 2 that injects a fuel. An opening degree of the fuel injector 2 is controlled to change the amount of air supply (the amount of fuel supply) supplied to a cylinder of the engine 1 to obtain a required vehicle engine rotation speed. The engine 1 is connected to a radiator 4 via a cooling water pipe. The radiator 4 radiates the heat of the engine 1.

The engine 1 is mainly controlled by an engine control unit 3. The engine control unit 3 is received sensor detection data detected from an engine control sensor group 20. The engine control sensor group 20 includes a speed sensor 20a, an engine rotation sensor 20b, an accelerator opening degree sensor 20c and an idle switch 20. The engine control unit 3 has an engine controller 3a that controls the engine 1 and the fuel injector 2 based on the sensor detection data and engine control commands. The engine control unit 3 also has a clutch controller 3b which executes an on-off control of an A/C clutch 43 of the variable capacity compressor 8.

The vehicular air conditioner 6 includes a refrigeration cycle 7a and an air-conditioning unit 7b which accommodates the evaporator 12 of the refrigeration cycle 7a therein and discharges a temperature-controlled air. The refrigeration cycle 7a includes the variable capacity compressor 8, a condenser 9 a liquid tank 10, a thermostatic expansion valve 11, the evaporator 12 and refrigerant pipes that connect the above members.

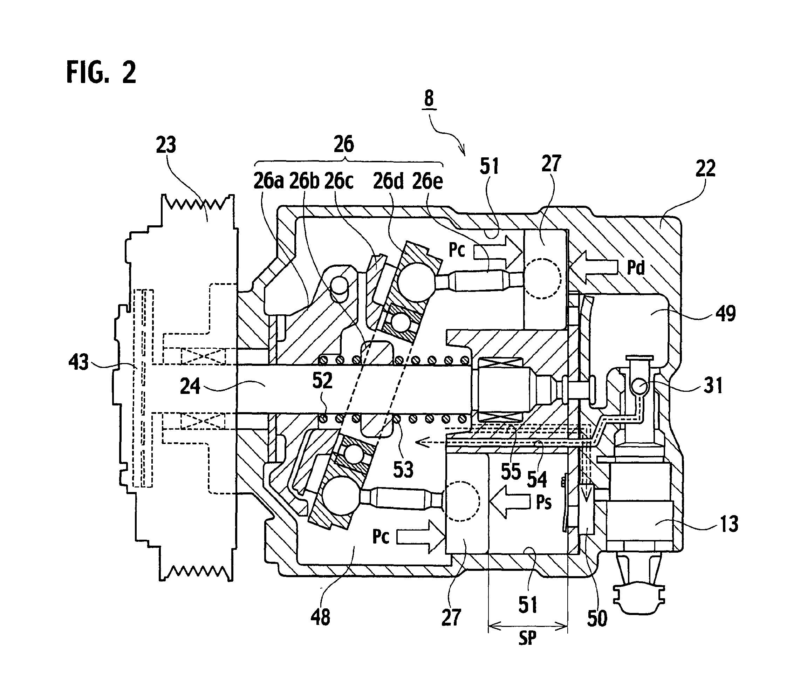

The variable capacity compressor 8 has the A/C clutch 43 (see Fig. 2) to turn on to connect and turn off to disconnect the compressor 8 to and from the engine 1, which serves as a drive source. When the A/C clutch 43is turned off, the compressor 8 stops since driving force of the engine 1 is not transferred to the compressor 8. When the A/C clutch 43 connects, the compressor 8 is driven since the driving force of the engine 1 is transferred to the compressor 8. When the compressor 8 is driven, the compressor 8 compresses a low-temperature and low-pressure vaporized refrigerant introduced from the evaporator 12 which is located upstream of the compressor 8 into the compressor 8 and discharges the compressed high-temperature and high-pressure vaporized refrigerant to the condenser 9 located downstream of the compressor 8.

The condenser 9 is located in front (upstream) of the radiator 4 in vehicular traveling direction, so that an air flow when the vehicle is running and an air from an electric fan 15 pass through the condenser 9. The high-temperature and high-pressure vaporized refrigerant flowing from the compressor 8 into the condenser 9 is cooled by the air passing through the condenser 9 to the condensation point, and becomes a mid-temperature and high-pressure liquid refrigerant, and flows into the liquid tank 10 located downstream of the condenser 9.

The liquid tank 10 removes water and foreign matter from the mid-temperature and high-pressure liquid refrigerant flowing therein and separates liquid from gas. The liquid-phase refrigerant separated from the gas-phase refrigerant in the liquid tank 10 flows toward a thermostatic expansion valve 11 located downstream of the liquid tank 10.

The thermostatic expansion valve 11 rapidly expands the mid-temperature and high-pressure liquid refrigerant flown from the liquid tank 10 and changes it into a low-temperature and low-pressure atomized liquid refrigerant. This atomized liquid refrigerant flows to the evaporator 12 located downstream of the expansion valve 11.

The evaporator 12 is disposed in an air passage of the air-conditioning unit 7b provided in a passenger compartment and cools air flowing in the air passage. The atomized liquid refrigerant flown from the expansion valve 11 into the evaporator 12 evaporates in the evaporator 12 as taking heat away from the air flowing through the evaporator 12. With this, the air flowing through the evaporator 12 is cooled. The low-temperature and low-pressure refrigerant becomes a gas-phase after passing through the evaporator, and flows downstream to the compressor 8.

The air-conditioning unit 7b is disposed in the passenger compartment to discharge air whose temperature is controlled therein into the passenger compartment. The air-conditioning unit 7b includes a case 39 forming an air passage 39a therein, an intake 40 disposed at an upstream end of the air passage 39a to introduce air into the air passage 39a, an electric fan 16 disposed downstream of the intake 40, the evaporator 12 disposed downstream of the electric fan 16, and a discharge door (not shown) to adjust an opening degree of an outlet 39b formed at a downstream end of the air passage 39a.

The intake 40 has an inside air inlet 40a to introduce air from the passenger compartment, an outside air inlet 40b to introduce air from outside the passenger compartment and an intake door 40c to adjust the opening degrees of the inlet 40a and the outlet 40b.

The electric fan 16 is rotated by a blower fan motor 19. When the electric fan 16 rotates, the inside air and/or the outside air is introduced into the air passage via the intake 40, blown to the evaporator 12, cooled by the evaporator 12, and discharged into the passenger compartment via the outlet 39b.

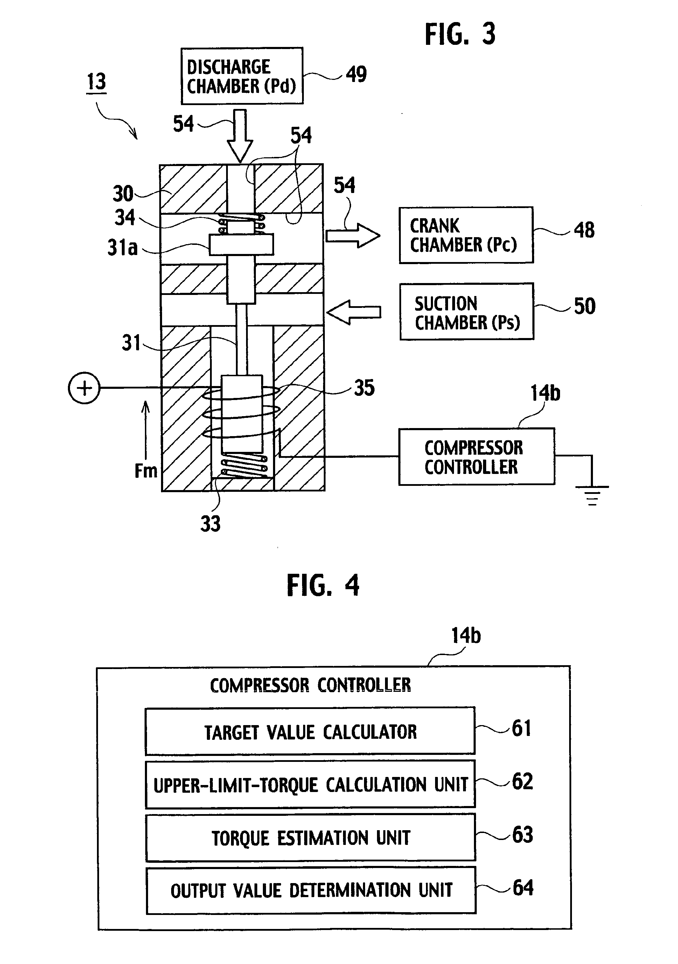

Next, the variable capacity compressor 8 will be described with reference to Figs. 2 and 3. As shown in Fig. 2, the variable capacity compressor 8 has a housing 22 forming therein cylinder bores 51 evenly apart from each other in a circumferential direction around the axis, a suction and discharge chambers 50, 49 proximate to the top-dead-center of the cylinder bores 51 and a crank chamber 48 proximate to the bottom-dead-center of the cylinder bores 51, pistons 27 reciprocatably disposed in the cylinder bores 51, a rotating shaft 24 rotatably supported by the housing 22 in the crank chamber 48, the A/C clutch 43 to connect/disconnect a rotary driving force transferred from the engine 1 which serves as a drive source to/from the rotating shaft 24, and a conversion mechanism 26 (26a, 26b, 26c, 26d, 26e) being attached to the rotating shaft 24 to convert rotation of the rotating shaft 24 into reciprocation of the pistons 27.

For example, the conversion mechanism 26 has a rotor 26a fixed to the rotating shaft 24 to rotate together with the rotating shaft 24, a sleeve 26b slidable with respect to the rotating shaft 24 in the axial direction, a hub 26c attached to the sleeve 26b as being tiltable at any angle with respect to the rotating shaft 24 and connected to the rotor 26a to rotate together with the rotating shaft 24 as being tiltable at any angle with respect to the rotating shaft 24, a swash plate 26d attached to the hub 26c as being tiltable at any angle with respect to the rotating shaft 24, and piston rods 27e connecting the swash plate 26d and pistons 27.

When the clutch 43 is turn on to rotate the rotating shaft 24, the pistons 27 reciprocate in cylinder bores 51. With this, the refrigerant is sucked from outside of the compressor (upstream of the compressor) through a suction port (not shown) into the suction chamber 50 of the compressor 8 and further sucked into the cylinder bores 51 and compressed within the cylinder bores 51. The compressed refrigerant is discharged from the cylinder bores 51 to the discharge chamber 49 and outside of the compressor 8 (downstream of the compressor 8) via a discharge port (not shown).

When the inclination angle of the swash plate 26d changes, the piston stroke changes and the refrigerant flow discharged from the compressor 8 changes, that is, the discharge amount of the compressor 8 changes.

In order to enable to control the discharge amount, the compressor 8 has a capacity control mechanism. The capacity control mechanism has a pressure introduction path 54 communicating the discharge chamber 49 with the crank chamber 48, a pressure discharge path 55 communicating the crank chamber 48 with the suction chamber 50, and a capacity control valve 13 to change area of the pressure introduction path 54.

When the opening degree of the capacity control valve 13 changes, the amount of high-pressure refrigerant flown from the discharge chamber 49 into the crank chamber 48 via the pressure introduction path 54 changes and accordingly the pressure in the crank chamber 48 changes. This changes the pressure difference between pressure on the top-dead-center side of the piston 27 (the pressure Ps in the suction chamber 50) and the pressure on the bottom-dead-center side of the piston 27 (the pressure Pc in the crank chamber 48). As a result, the piston stroke changes as the change of the inclination angle of the swash plate 26d changes, and thereby, the discharge amount of the compressor 8 changes. More concretely, when the pressure difference Pc-Ps (the difference between the pressure on the top-dead-center side of the piston 27 and the pressure in the bottom-dead-center side of the piston 27) increases, piston stroke becomes small. On the other hand, when the pressure difference Pc-Ps reduces, piston stroke becomes large. When piston stroke becomes small, the amount of the refrigerant discharged from the variable capacity compressor 8 reduces, and thereby, the amount of the refrigerant circulating in the refrigeration cycle 7a reduces and the cooling ability of the evaporator 12 decreases (The air temperature proximate the outlet of the evaporator rises). In contrast, when the piston stroke becomes large, the amount of the refrigerant discharged from the variable capacity compressor 8 increases, and thereby, the amount of the refrigerant circulating in the refrigeration cycle 7a increases and the cooling ability of the evaporator 12 increases (The air temperature proximate the outlet of the evaporator rises).

As shown in Fig. 3, the capacity control valve 13 has a valve case 30 which forms a part of the pressure introduction path 54 therein and a plunger 31 slidably supported by the valve case 30 in the valve case 30. The plunger 31 is formed with a valve plug 31a to open and close the pressure introduction path 54 and a movable metal solenoid core 35a in an electromagnetic coil 35 serving as an electromagnetic actuator. When the electromagnetic coil 35 is energized to produce an electromagnetic force, the plunger 31 slides and, according to slide amount of the plunger 31, the opening degree of the pressure introduction path 54 is controlled by the valve plug 31a. The plunger 31 receives spring forces of set springs 33, 34 from the both axial directions. With this structure, the set pressure of the valve plug 31a is mainly set by the set springs 33, 34 and can be changed according to the strength of the electromagnetic force of the electromagnetic coil 35.

The capacity control valve 13 is a Pd-Ps pressure difference sensitive capacity control valve 13. As shown in Fig. 3, the valve plug 31a receives the pressure difference between the high pressure Pd and the low pressure Ps in the axial direction of the plunger 31. When the pressure difference between the high pressure Pd and the low pressure Ps changes, the position of the valve plug 31 a changes against the set pressure. In the present embodiment, the low pressure Ps affects the valve plug 31a to move in a valve closing direction (closer to a valve seat) and, on the other hand, the high pressure Pd affects the valve plug 31a to move in a valve opening direction (away from the valve seat). With this structure, when the pressure difference between the high pressure Pd and low pressure Ps becomes large, the valve plug 31 a moves in the valve opening direction and, when the pressure difference between the high pressure Pd and low pressure Ps becomes small, the valve plug 31a moves in the valve closing direction. As a result, the valve plug 31 a stop where the set pressure and the pressure difference between the high pressure Pd and the low pressure Ps are balanced.

As described above, the set pressure is changed when the electromagnetic coil 35 is electrified to generate an electromagnetic force. In the present embodiment, the electromagnetic force of the electromagnetic coil 35 biases the valve plug 31a toward the valve closing direction. Therefore, when the electromagnetic force of the electromagnetic coil 35 becomes larger, the set pressure becomes larger. Namely, when electricity applied to the electromagnetic coil (duty factor of a control pulse signal) become lager to obtain a larger electromagnetic force of the electromagnetic coil 35, the set pressure increases. On the other hand, when electricity applied to the electromagnetic coil 35 (duty factor of a control pulse signal) become smaller to obtain a smaller electromagnetic force of the electromagnetic coil 35, the set pressure decreases. When the set pressure is increased, the compressor and the refrigeration cycle will be stabilized in a condition having a large pressure difference between the discharge pressure Pd and the suction pressure Ps in the compressor. In contrast, when the set pressure is decreased, the compressor and the refrigeration cycle will be stabilized in a condition having a small pressure difference between the discharge pressure Pd and the suction pressure Ps in the compressor.

The electromagnetic coil 35 receives a control pulse signal or an external control signal from a compressor controller 14b of an air-conditioner control unit 14 which will be described later. The control pulse signal has a duty factor, and an electromagnetic force proportional to the duty factor is applied to the plunger 31. The applied electromagnetic force changes the set pressure of the valve plug 31a, thereby changing a lift (valve opening) of the valve plug 31a. A change in the lift (valve opening) of the valve plug 31a changes a flow rate of high-pressure refrigerant flowing from the discharge chamber 49 to the crank chamber 48 through the pressure introducing path 54. This operation results in changing the pressure difference Pc-Ps (pressure difference between the pressure on the top-dead-center side of the piston 27 and the pressure on the bottom-dead-center side of the piston 27), the inclination of the swash plate 26d, and the piston stroke.

The vehicular air conditioner 6 is mainly controlled by the air-conditioner control unit 14 serving as its controller and partially controlled by the engine control unit 3.

As shown in Fig. 1, the air-conditioner control unit 14 is connected to the engine control unit 3 via a bidirectional communication line. The air-conditioner control unit 14 receives detection data from an air-conditioner control sensor group 21. The sensor group 21 includes standard sensors provided for the air conditioner 6, such as an air-conditioner (A/C) switch 21a, a mode switch 21 b, a defrost switch 21 c, an auto switch 21d, a fresh air (FRE) switch 21e, a recirculation (REC) switch 21f, a temperature adjust switch 21g, an OFF switch 21h, an interior temperature sensor 21i serving as a interior temperature detecting means detecting a temperature in the vehicle interior, an ambient temperature sensor 21j serving as an ambient temperature detecting means detecting a temperature outside the vehicle, an insolation sensor 21k, an evaporator exit air temperature sensor 211 detecting an air temperature at the exit of the evaporator 12, a water temperature sensor 21m, a refrigerant pressure sensor 21n detecting a pressure of the refrigerant which is discharged from the compressor 8, and the like.

The air-conditioner control unit 14 controls the compressor 8, blower fan motors 17 and 19, the intake door 40c, and the like according to detection data from the above-described sensors and air-conditioner control instructions. The air-conditioner control unit 14 includes the compressor controller 14b, a fan motor controller 14e, and an intake controller 14f, as shown in Fig. 1.

The fan motor controller 14e receives a target interior temperature set by a passenger using the temperature adjust switch 21 g and detection data from the sensors of the air-conditioner control sensor group 21, calculates a target flow rate of air to be supplied from the air conditioning unit 7b. Based on the calculated flow rate, the fan motor controller 14e controls the fan motor 17 of the electric fan 15 through a PWM (pulse width modulation) module 18 so as to control the flow rate of the electric fan 15, and also controls the fan motor 17 of the electric blower fan 16 so as to control a flow rate of the electric blower fan 16. The fan motor 17 may be directly or indirectly controlled by the engine control unit 3.

If the fresh air (FRE) switch 21e is pressed or if a control signal to establish an outside air mode (fresh air mode) is provided, the intake controller 14f drives a door driver 41 of the intake door 40c to close the inside air intake 40a and open the outside air intake 40b so that fresh air is guided into the air passage of the air-conditioning unit 7b. If the recirculation (REC) switch 21f is pressed or if a control signal to establish an inside air mode (recirculation mode) is provided, the intake controller 14f drives the door driver 41 of the intake door 40c to open the inside air intake 40a and close the outside air intake 40b so that inside air is introduced into the air passage of the air-conditioning unit 7b.

The capacity controller 14b sets a target evaporator-exit air temperature TMeva according to a target interior temperature set by a passenger with the temperature adjust switch 21 g, calculates a duty factor to lead an actual evaporator-exit air temperature Teva close to the target evaporator-exit air temperature TMeva, and sends the duty factor to the capacity control valve 13. With this structure, the refrigerant discharge amount of the compressor 8 is controlled.

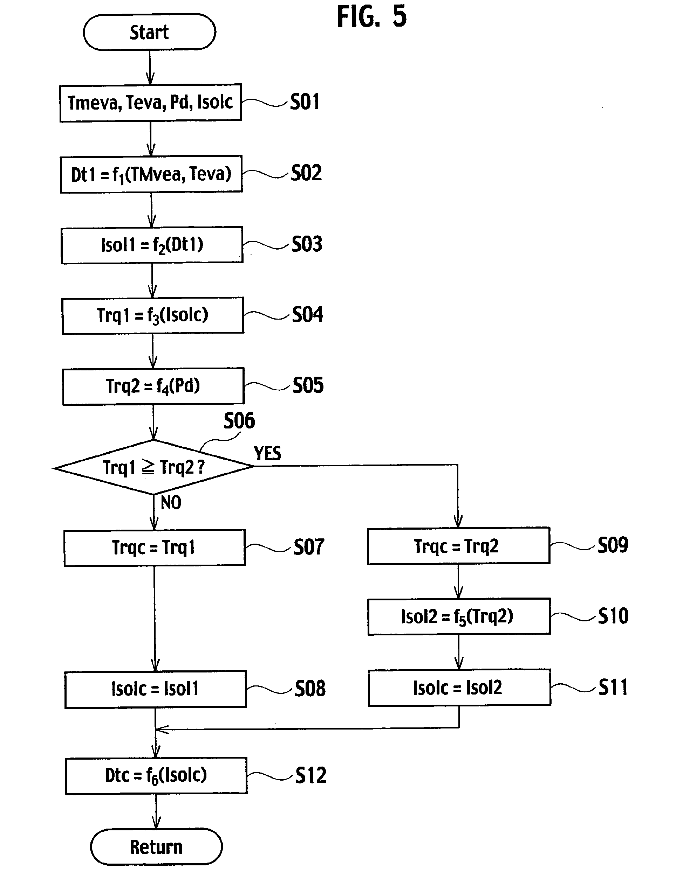

A method for controlling the capacity control valve 13 of the compressor 8 by the compressor controller 14b (controller of the variable capacity compressor) will be described with reference to Figs. 4 and 5.

As shown in Fig. 4, the compressor controller 14b includes a target value calculator 61, an upper-limit-torque calculation unit 62, a torque estimation unit 63 and an output value determination unit 64.

The target value calculator 61 (serving as a target value calculator) is configured to calculate a target duty factor Dt1 and a target control electric current value Isol1 for the capacity control valve 13 based on a target temperature (target evaporator-exit air temperature TMeva) and an actual temperature (actual evaporator-exit air temperature Teva). The upper-limit-torque calculation unit 62 (upper-limit-torque calculator) calculates a driving torque Trq2 (upper-limit driving torque Trq2) for the compressor 8, assuming that the compressor 8 is in a full-stroke state (a state of the maximum compression capacity), based on a high pressure Pd which is used as a variable term. The torque estimation unit 63 (serving as a torque estimator) estimates a driving torque Trq1 for the compressor 8 based on an actual control electric current value Isolc which is used as a variable term. The output value determination unit 64 (serving as a output value determiner) selects the target duty factor Dt1 as an output duty factor Dtc when the estimated driving torque Trq1 is less than the upper-limit driving torque Trq2 (Trq2 ≧ Trq1). The output value determination unit 64 calculates a duty factor Dt2 based on the upper-limit driving torque Trq2 and selects the calculated duty factor Dt2 as the output duty factor Dtc when the estimated driving torque Trq1 is equal to or greater than the upper-limit driving torque value Trq2.

A control flow of the compressor controller 14b will be described in detail with reference to Fig. 5.

As shown in Fig. 5, in step S01, the compressor controller 14b detects an actual evaporator-exit air temperature Teva, a high pressure Pd and an actual control electric current value Isolc, and sets a target evaporator-exit air temperature TMeva based on a target interior temperature set by a passenger using the temperature adjust switch 21g. Here, the actual control electric current value Isolc is an actual value Isolc of the electric current currently applied to the capacity control valve 13 or an output control electric current value Isolc which is output at the previous time.

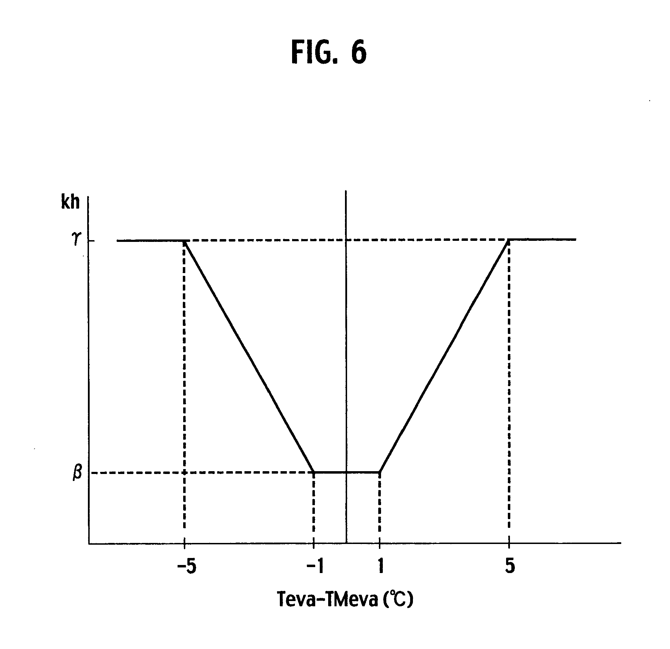

In step S02, the compressor controller 14b calculates a target duty factor Dt1 for the capacity control valve 13 (ECV) based on the actual evaporator-exit air temperature Teva and the target evaporator-exit air temperature TMeva so that the actual evaporator-exit air temperature Teva becomes closer to the target evaporator-exit air temperature TMeva. For example, the compressor controller 14b calculates a proportional constant kh based on a difference between the actual evaporator-exit air temperature Teva and the target evaporator-exit air temperature TMeva (TMeva-TMeva) using a map shown in Fig. 6 and calculates the target duty factor Dt1 based on the proportional constant kh. In step S03, the compressor controller 14b calculates a target control electric current value Isol1 by converting the calculated duty factor Dt1 calculated in step S02 into an electric current value based on a reference voltage (for example, 12V) applied to the ECV. The above steps S01 to S03 are executed by the target value calculator 61. The target control electric current value Isol1 calculated by the target value calculator 61 is a temporary control electric current value Isol1 and it is determined, in the following steps, whether or not to output the value to the capacity control valve 13.

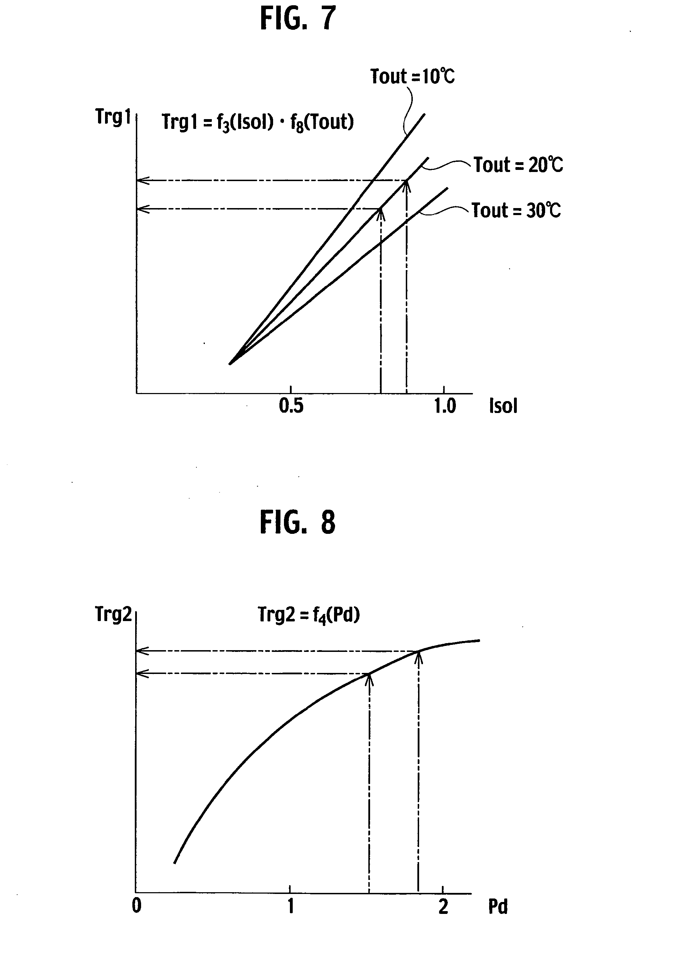

In step S04, the torque estimation unit 63 estimates the driving torque Trq1 of the compressor 8 based on the actual control electric current value Isolc (the control electric current value currently applied to the capacity control valve 13, in this example) which is read in step S01. Here, the estimated driving torque Trq1 is calculated by using a map (for example a map shown in Fig. 7), which is a previously prepared map indicating a correlation between the actual control electric current value Isolc applied to the capacity control valve 13 and the driving torque Trq2 of the compressor 8. In the map shown in Fig. 7, an ambient temperature Tout around the compressor 8 is used as a variable term in addition to the actual control electric current value Isolc. Next, in step S05, the upper-limit-torque calculation unit 62 calculates a driving torque Trq2 (upper-limit driving torque Trq2) of the compressor 8, assuming that the compressor 8 is in a full-stroke state, based on the high pressure Pd (that is, the current high pressure Pd) which is read in step S01. The calculated driving torque Trq2 is the upper-limit driving torque Trq2 of the compressor 8 and used to determine whether or not the estimated driving torque Trq1 is lower than the upper limit value. For example, the upper-limit driving torque Trq2 is calculated by using a map (for example a map shown in Fig. 8), which is a previously prepared map indicating a correlation between the driving torque Trq2 of the compressor 8 in a full-stroke state and the high pressure Pd thereof.

In step S06, the output value determination unit 64 determines whether or not the estimated driving torque Trq1 is greater than the upper-limit driving torque Trq2. When the estimated driving torque Trq1 is greater than the upper-limit driving torque Trq2 (YES in step S06), the process proceeds to step S09 and, when the estimated driving torque Trq1 is not greater than the upper-limit driving torque Trq2 (NO in step S06), the process proceeds to step S07.

When it is determined that the estimated driving torque Trq1 is smaller than the upper-limit driving torque Trq2 in step S06, the compressor 8 is considered to be in a normal operation state other than a full-stroke state, so the target control electric current value Isol1 calculated in step 04 is simply used as an output control electric current value Isolc. Namely, the output value determination unit 64 outputs the estimated driving torque Trq1 to the engine control unit as the output value Trqc in step S07 and selects the target control electric current value Isol1 which is calculated in step 04 as the output control electric current value Isolc in step S08. On the other hand, when it is determined, in step S06, that the estimated driving torque Trq1 is greater than the upper-limit driving torque Trq2, the compressor 8 is considered to be operating in a full-stroke state, so the target control electric current value Isol1 calculated in step 04 is not used since the value Isol1 is larger than necessary. Namely, the output value determination unit 64 outputs the upper-limit driving torque Trq2 to the engine control unit as the output value Trqc in step S09, calculates a control electronic current value Isol2 in a full-stroke state based on the upper-limit driving torque Trq2 in step S10, and selects the calculated control electronic current value Isol2 as the output control electric current value Isolc in step S10. Here, in order to calculate the control electric current value Isol2, a control electric current value Isol is calculated back from the upper-limit driving torque Trq2 using a function (the map of Fig. 8 in this example) used in step 05.

In step S12, the output duty factor Dtc for the capacity control valve 13 is calculated based on the output control electric current value Isolc and output to the capacity control valve 13.

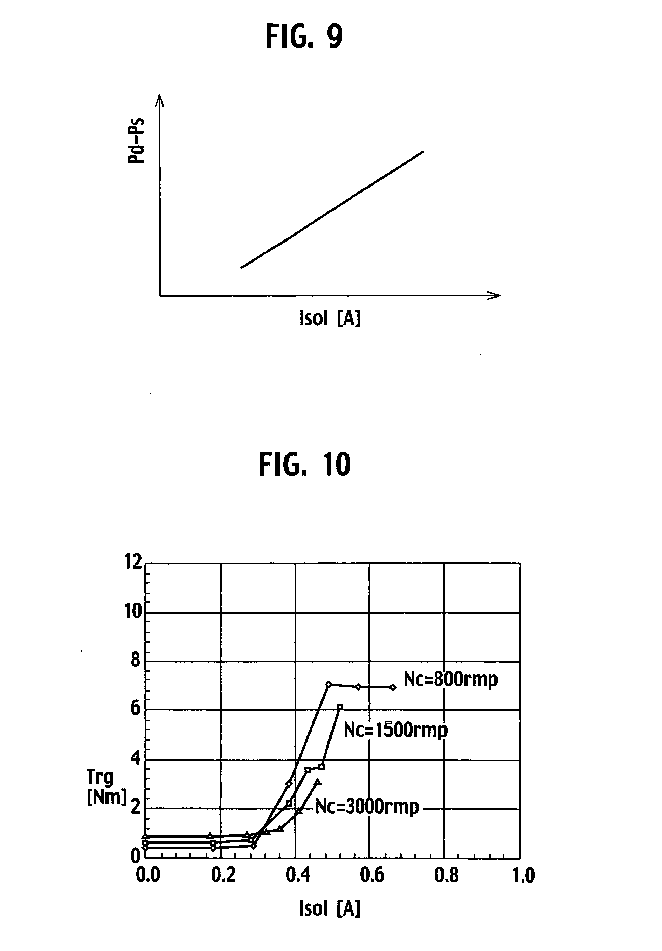

As shown in Fig. 9, the control electric current Isol and the Pd-Ps pressure difference in the capacity control valve 13 shown in Fig. 3 are in a proportional relation. Further, the pressure difference in front and back of the piston 27 and the driving torque Trq of the compressor 8 shown in Fig. 2 are also in a proportional relation. Therefore, the driving torque Trq of the compressor and the control electric current Isol are in a proportional relation. The experimental results (see Fig. 10) given by the inventor of the present invention also show that the driving torque Trq and the control electric current Isol are in a proportional relation regardless of the rotation speed (rpm). The torque estimation unit 63 thus can estimate the driving torque Trq1 of the compressor 8 based on the control electric current Isol in step S04.

As described above, the present embodiment uses the Pd-Ps pressure difference sensitive capacity control valve 13, a relatively accurate driving torque Trq can be calculated (steps S07, S09). Therefore, in such a structure that the engine 1 is used as a drive source of the variable capacity compressor 8, the intake air quantity (fuel mixture supply quantity) can be accurately controlled corresponding to the drive load (driving torque) of the compressor 8.

Further, the present embodiment can determine whether the compressor 8 is in a full-stroke state or in a capacity-variable state by comparing the estimated driving torque Trq1 with the driving torque Trq2 (upper-limit driving torque Trq2) of the compressor 8, assuming that the compressor 8 is in a full-stroke state. When it is determined that the compressor 8 is in a full-stroke state, the control electric current Isol of the capacity control valve 13 is not increased. With this structure, in a full-stroke state, even if the evaporator-exit air temperature is not high enough, a duty factor for the capacity control valve 13 will not be increased, that is, the control electric current Isol will not further increased, so that the electric current will not be applied more than necessity.

The present invention has been described with reference to the above-described embodiment; however, it should be appreciated that the present invention is not limited to the above embodiment. Various Changes and modifications of embodiments, examples and operations will be apparent to persons skilled in the art based on the above disclosure.. In other words, it should be appreciated that the present invention includes various embodiments and the like which are not described above. Therefore, the present invention is limited only by the subject matter defined in the appended claims in the application.

## Claims

1. A variable capacity compressor controller controlling a compression capacity using a capacity control valve which senses a pressure difference between a high pressure and a low pressure in a refrigeration cycle, comprising:
a target value calculator operable to calculate a target duty factor or a target control electric current value for the capacity control valve based on a target temperature and an actual temperature;
an upper-limit-torque calculator operable to calculate a driving torque of a variable capacity compressor as an upper-limit driving torque based on a high pressure under an assumption that the compressor is in a full-stroke state;
a torque estimator operable to calculate an estimated driving torque of the compressor based on an actual control electric current; and
an output value determiner operable to select the target duty factor or the target control electric current value calculated by the target value calculator as an output duty factor or an output control electric current value when the estimated driving torque is smaller than the upper-limit driving torque, and select a duty factor or a control electric current value calculated based on the upper-limit driving torque as the output duty factor or the output control electric current value when the estimated driving torque is equal to or greater than the upper-limit driving torque.

2. A variable capacity compressor control method controlling a compression capacity using a capacity control valve which senses a pressure difference between a high pressure and a low pressure in a refrigeration cycle, comprising:
calculating a target duty factor or a target control electric current value for the capacity control valve based on a target temperature and an actual temperature;
calculating a driving torque of the variable capacity compressor as an upper-limit driving torque based on a high pressure under an assumption that the compressor is in a full-stroke state;
calculating an estimated driving torque of the compressor based on an actual control electric current; and
selecting the target duty factor or target control electric current value as an output duty factor or an output control electric current value when the estimated driving torque is smaller than the upper-limit driving torque, and selecting a duty factor or a control electric current value calculated based on the upper-limit driving torque as the output duty factor or the output control electric current value when the estimated driving torque is equal to or larger than the upper-limit driving torque.
